# EUROPÄISCHE PATENTSCHRIFT

(11) **EP 1 616 335 B1**
(45) Veröffentlichungstag und Bekanntmachung des Hinweises auf die Patenterteilung: **09.12.2009**
(21) Anmeldenummer: 04727893.2
(22) Anmeldetag: 16.04.2004
(51) Int. Cl.: G21C 9/004

(54) **KERNTECHNISCHE ANLAGE UND VERFAHREN ZUM BETRIEB EINER KERNTECHNISCHEN ANLAGE**
NUCLEAR FACILITY AND METHOD FOR OPERATING A NUCLEAR FACILITY
INSTALLATION NUCLEAIRE ET PROCEDE D'EXPLOITATION D'UNE INSTALLATION NUCLEAIRE

(30) Priorität: 16.04.2003 DE 10318081; 16.04.2003 DE 10318141
(43) Veröffentlichungstag der Anmeldung: 18.01.2006
(73) Patentinhaber: AREVA NP GmbH, 91052 Erlangen (DE)
(72) Erfinder: MESETH, Johann, 64807 Dieburg (DE)
(74) Vertreter: Tergau & Pohl Patentanwälte
(86) Internationale Anmeldenummer: PCT/EP2004/004108
(87) Internationale Veröffentlichungsnummer: WO 2004/093093

(56) Entgegenhaltungen:
- EP-A- 0 032 347
- WO-A-97/04460
- FR-A- 1 477 135
- FR-A- 2 356 195
- US-A- 3 718 539

## Beschreibung

Die Erfindung betrifft eine kemtechnische Anlage, insbesondere eine Siedewasserreaktoranlage, mit einer Druckkammer, mit einer Kondensationskammer und mit einem mit der Druckkammer verbundenen Flutbecken. Die Erfindung betrifft weiterhin ein Verfahren zum Betrieb einer derartigen kerntechnischen Anlage.

Aus der DE 100 12 554 A1 ist eine solche Siedewasserreaktoranlage zu entnehmen, bei der innerhalb eines Sicherheitsbehälters ein Reaktordruckbehälter, eine Kondensationskammer und auf dieser angeordnet ein Flutbecken vorgesehen sind. Das Flutbekken ist nach oben zum eine Druckkammer bildenden Innenraum des Sicherheitsbehälters offen. Die Druckkammer ist zur Kondensationskammer im Normalbetrieb dicht abgeschlossen, so dass kein Druckausgleich erfolgt. In der DE 100 12 554 A1 wird ein als "SWR1000" bezeichnetes Konzept beschrieben. Ziel dieses Konzepts ist es, eine hohe Betriebssicherheit zu erreichen und hierbei möglichst auf passiv wirkende Komponenten zurückzugreifen, d.h. solche Komponenten, die unabhängig von einer externen Energiezufuhr sind und vorzugsweise zusätzlich auch ohne bewegliche und damit anfällige Teile auskommen. In bestimmten Situationen außerhalb des Normalbetriebs kann infolge eines Druckanstiegs oder Druckabfalls in der Druckkammer der Differenzdruck zwischen der Druckkammer und der Kondensationskammer einen zulässigen Grenzwert überschreiten. Beim SWR1000-Konzept ist in diesem Fall zum Druckausgleich zwischen der Kondensationskammer und der Druckkammer eine nach Art eines U ausgebildete Rohrleitung vorgesehen, die das Innere der Kondensationskammer mit der Druckkammer verbindet und im Normalbetrieb mit Kühlwasser angefüllt und damit verschlossen ist.

Das im Flutbecken befindliche Kühlwasser wird im Laufe des Betriebs erwärmt und muss daher in gewissen Zeitabständen gekühlt werden. Hierzu ist ein gemeinsamer Kühlkreislauf für die Kühlflüssigkeit des Flutbeckens und die der Kondensationskammer vorgesehen. Die Kühlflüssigkeit aus der Kondensationskammer wird hierbei über einen Wärmetauscher in das Flutbecken gepumpt und von dort wieder in die Kondensationskammer zurückgeleitet. Hierbei besteht jedoch das Problem, dass zwischen dem Flutbecken und der Kondensationskammer unterschiedliche Drücke herrschen können und während des Normalbetriebs ein Druckausgleich nicht stattfinden soll. Ein solcher Druckausgleich ist im Hinblick auf die Funktionsfähigkeit des Kühlsystems, beispielsweise bei einem Kühlmittelverluststörfall, zu vermeiden.

Der Erfindung liegt daher die Aufgabe zugrunde, einen sicheren Betrieb der Anlage zu ermöglichen.

Die Aufgabe wird gemäß der Erfindung gelöst durch eine kemtechnische Anlage, insbesondere Siedewasserreaktoranlage, mit den Merkmalen des Patentanspruchs 1. Danach ist das Flutbecken über eine nach Art eines Siphons ausgebildete Überlaufleitung mit der Kondensationskammer verbunden.

Unter Überlaufleitung wird hier insbesondere eine einfache, direkte Rohrleitung verstanden, in die bevorzugt keine weiteren Komponenten, wie beispielsweise eine Rückschlagklappe, ein Ventil, eine Pumpe oder ein Wärmetauscher, zwischengeschaltet sind. Die Überlaufleitung gewährleistet daher ein einfaches und sicheres Zurückleiten der Kühlflüssigkeit in die Kondensationskammer, wenn eine maximale Füllstandshöhe des Flutbeckens überschritten wird und das Flutbecken "überläuft". Aufgrund der siphonartigen, also U-förmigen Ausgestaltung der Überlaufleitung ist zudem im Normalbetrieb ein Druckausgleich zwischen dem Flutbecken und der Kondensationskammer vermieden. Denn aufgrund der siphonartigen Ausgestaltung ist die Überlaufleitung zumindest teilweise mit Kühlflüssigkeit gefüllt, so dass die Kondensationskammer zum Flutbecken gasdicht abgeschlossen ist. Da das Flutbecken zugleich zur Druckkammer offen ist, d.h. zwischen dem Flutbecken und der Druckkammer ist ein offener Gastausch und damit ein Druckausgleich möglich, ist durch diese Maßnahme zugleich vermieden, dass über die Überströmleitung ein Druckausgleich zwischen der Kondensationskammer und der Druckkammer stattfindet. Durch die Ausgestaltung als einfache Rohrleitung ist eine hohe Betriebssicherheit gegeben, da für die Funktionsfähigkeit keine aktiven Komponenten notwendig sind und das Funktionsprinzip alleine auf physikalischen und thermodynamischen Gesetzmäßigkeiten beruht.

Vorzugsweise umfasst die Überlaufleitung zwei Siphonschenkel und weist eine Steighöhe auf, bis zu der die Überlaufleitung im normalen Betriebszustand mit Flüssigkeit gefüllt ist. Diese Steighöhe ist dabei derart bemessen, dass ab einem Grenzdifferenzdruck zwischen der Druckkammer und der Kondensationskammer ein Druckausgleich, also ein Gasaustausch, zwischen diesen beiden Kammern stattfinden kann. Diese Ausgestaltung hat den entscheidenden Vorteil, dass damit auch vom normalen Betriebszustand abweichende Druckverhältnisse berücksichtigt werden, bei denen ein Druckausgleich zwischen Druck- und Kondensationskammer erfolgen muss. Dies ist beispielsweise dann der Fall, wenn in der Druckkammer ein Unterdruck auftritt, der einen zulässigen Unterdruckgrenzwert überschreitet. Für den Fall, dass kein Druckausgleich vorgesehen wäre, müsste nämlich die Betonstruktur der Trennwände zwischen der Kondensationskammer und der Druckkammer für entsprechend hohe Differenzdrücke ausgelegt werden. Die Ausgestaltung mit der siphonartigen Überströmleitung hat den wesentlichen Vorteil hierbei, dass bis zu dem vorbestimmten Grenzdifferenzdruck der Verschluss absolut gasdicht ist und bei Überschreiten des Grenzdifferenzdrucks sicher und zuverlässig ein offener Gas- und damit Strömungsweg zum Druckausgleich freigeschalten wird. Im Unterschied hierzu besteht beispielsweise bei Rückschlagklappen od.dgl. immer die Gefahr von Leckageströmen, die bei dem bereits erwähnen SWR1000-Konzept zwingend vermieden werden müssen.

Um die Wirksamkeit des Kühlsystems beispielsweise bei einem hypothetischen Kühlmittelverluststörfall nicht zu beeinträchtigen, muss weiterhin gewährleistet sein, dass die bei einem solchen Störfall in der Druckkammer auftretenden Dampfmengen zuverlässig in die Kondensationskammer geleitet werden. Da hierbei in der Druckkammer ein Überdruck auftritt, ist die Überlaufleitung derart angeordnet und ausgebildet, dass bei Überschreiten eines Überdruckgrenzwerts der Druckausgleich zwischen der Kondensations- und der Druckkammer über eine weitere Einrichtung erfolgt. Die weitere Einrichtung ist dabei vorzugsweise ein Kondensationsrohr, welches die Druckkammer mit der Kondensationskammer verbindet und dort unterhalb einer Füllstandshöhe mündet, bis zu der die Kondensationskammer im normalen Betriebszustand mit Flüssigkeit gefüllt ist. Dadurch ist das Kondensationsrohr bis zu der Füllstandshöhe mit Flüssigkeit gefüllt und die Füllstandshöhe ist derart bemessen, dass bei Überschreiten des Überdruckgrenzwerts der Druckausgleich über das Kondensationsrohr erfolgt, dass also im Falle eines Kühlmittelverluststörfalls der Dampf in die Flüssigkeit der Kondensationskammer eingeleitet wird und dort kondensieren kann. Der Druckausgleich erfolgt in diesem Fall daher ausschließlich über das Kondensationsrohr und nicht über die Überströmleitung. Umgekehrt erfolgt bei Überschreitung eines Unterdruckgrenzwerts der Druckausgleich in der Regel ausschließlich über die Überlaufleitung. Denn bei einem auftretenden Unterdruck in der Druckkammer müsste zunächst ein Großteil des Flüssigkeitsvorrats aus der Kondensationskammer über das Kondensationsrohr in die Druckkammer ausströmen, bevor ein Druckausgleich stattfinden könnte. Da dieses Ausströmen Zeit in Anspruch nimmt, besteht die Gefahr, dass in der Zwischenzeit eine unzulässige Druckdifferenz zwischen Kondensationskammer und Druckkammer aufgebaut wird.

Die Überlaufleitung ist daher derart angeordnet und/oder ausgebildet, dass ab einem bestimmten Grenzdifferenzdruck zwischen der Kondensationskammer und der Druckkammer die in der Überlaufleitung befindliche Flüssigkeit herausgedrückt wird und somit ein offener Strömungsweg gebildet wird. Dieser Grenzdifferenzdruck liegt dabei oberhalb des Überdruckgrenzwerts, ab dem die Strömungsverbindung von der Druckkammer über das Kondensationsrohr in die Kondensationskammer freigegeben ist. Damit wird gewährleistet, dass der Druckausgleich bei Unterdruck in der Druckkammer ausschließlich über die Überlaufleitung bzw. bei Überdruck in der Druckkammer ausschließlich über das Kondensationsrohr erfolgt, sobald die jeweiligen Grenzwerte überschritten werden.

In einer zweckdienlichen Ausgestaltung weist die Kondenationskammer oberhalb der Füllstandshöhe einen Gasraum auf, in den das zweite Ende der Überlaufleitung mündet. Damit ist gewährleistet, dass nicht Flüssigkeit aus der Kondensationskammer in die Überlaufleitung eingesogen wird. Bevorzugt ist dabei das zweite Ende in oder unmittelbar unterhalb der Decke der Kondensationskammer angeordnet.

Im Hinblick auf die passive Sicherheit ist weiterhin in einer bevorzugten Ausgestaltung vorgesehen, dass die Überlaufleitung zumindest in Teilbereichen, vorteilhafterweise größtenteils, innerhalb einer Wandstruktur eingebettet ist. Selbst bei einer schadhaften Rohrleitung ist daher die Funktionsfähigkeit der Überlaufleitung gewährleistet.

In einer zweckdienlichen Weiterbildung weist das Flutbecken einen Überlaufschacht auf und das erste Ende der Überlaufleitung mündet insbesondere im Bereich des Bodens des Überlaufschachts in diesen. Überschüssige Flüssigkeit läuft aus dem Flüssigkeitsreservoir des Flutbeckens in den Überlaufschacht. Dieser ist vorzugsweise derart ausgebildet, dass eine Separation der Gasanteile von der Flüssigkeit stattfindet, so dass keine oder nur sehr geringe Gasanteile in die Kondensationskammer gelangen. Durch die Anordnung des ersten Endes der Überlaufleitung am Boden des Überlaufschachts ist gewährleistet, dass die Überlaufleitung mit Flüssigkeit angefüllt ist.

Bevorzugt weist die Überlaufleitung einen oberen Siphonbogen auf, welcher auf einer Höhe oberhalb des Bodens des Überlaufschachts angeordnet ist. Durch diese Maßnahme kann der Überlaufschacht nicht vollständig leerlaufen und es stellt sich eine Mindest-Flüssigkeitshöhe im Überlaufschacht ein, die in etwa der Höhe des oberen Siphonbogens entspricht. Dadurch wird ein gewisser Flüssigkeitsvorrat bereitgestellt, durch den evtl. auftretende Verdunstungsverluste od.dgl. in der Überlaufleitung ausgeglichen werden.

Die Aufgabe wird weiterhin erfindungsgemäß gelöst durch ein Verfahren mit den Merkmalen des Patentanspruchs 10. Die im Hinblick auf die Anlage aufgeführten Vorteile und bevorzugten Ausgestaltungen sind sinngemäß auch auf das Verfahren zu übertragen. Darüber hinaus sind bevorzugte Ausgestaltungen des Verfahrens in den Unteransprüchen niedergelegt.

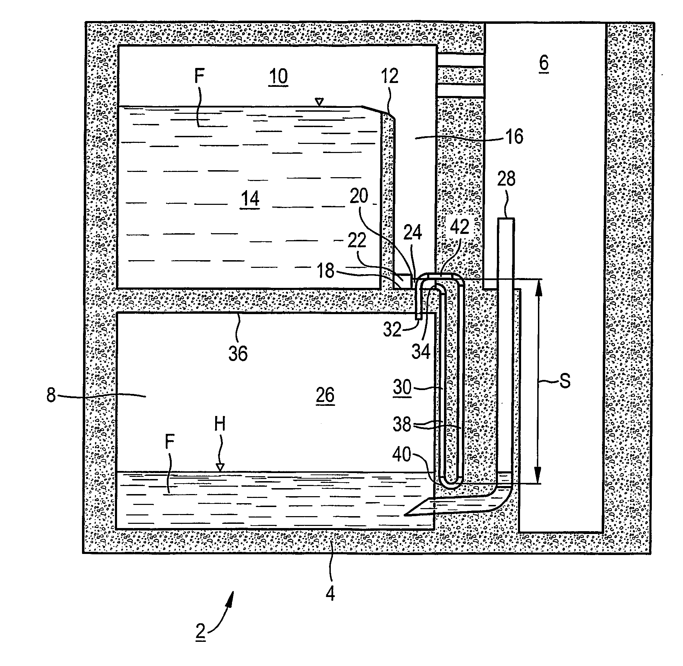

Ein Ausführungsbeispiel der Erfindung wird im Folgenden anhand der einzigen Figur näher erläutert. Diese zeigt in einer schematischen Darstellung einen Ausschnitt aus einem Sicherheitsbehälter einer Siedewasserreaktoranlage, die insbesondere nach dem SWR1000-Konzept aufgebaut ist.

Der ausschnittsweise dargestellte Sicherheitsbehälter 2 weist eine Wandstruktur 4 aus Beton auf, durch die eine Druckkammer 6, eine Kondensationskammer 8 und ein Flutbecken 10 gebildet sind. Das Flutbecken 10 ist zur Druckkammer 6 hin offen, d.h. es ist zwischen diesen beiden Bereichen ein Gasaustausch und somit ein Druckausgleich möglich, so dass im Flutbecken 10 und in der Druckkammer 6 die gleichen Druckverhältnisse herrschen.

Das Flutbecken 10 ist durch eine Trennwand 12 in ein Speicherbecken 14 und einen Überlauf- oder Separationsschacht 16 unterteilt. Am Boden 18 des Überlaufschachts 16 ist eine zweite, kleinere Trennwand 20 angeordnet, so dass der Bodenbereich in eine Separationskammer 22 und eine Abflusskammer 24 unterteilt ist. Das Speicherbecken 14 ist mit Kühlflüssigkeit F gefüllt.

Die Kondensationskammer 8 ist üblicherweise bis zu einer Füllstandshöhe H mit Kühlflüssigkeit F angefüllt. Oberhalb der Kühlflüssigkeit F ist ein Gasraum 26.

Die Kondensationskammer 8 ist einerseits über ein Kondensationsrohr 28 mit der Druckkammer 6 und andererseits über eine Überlaufleitung 30 mit dem Überlaufschacht 16 des Flutbeckens 10 verbunden. Das Kondensationsrohr 28 taucht mit seinem unteren angeschrägten Ende in die Kühlflüssigkeit F der Kondensationskammer 8 ein. Das zweite Ende des Kondensationsrohres 28 mündet in die Druckkammer 6. Das Kondensationsrohr ist daher in etwa bis zu der Füllstandshöhe H mit Wasser gefüllt, so dass die Kondensationskammer 8 von der Druckkammer 6 gasdicht abgetrennt ist.

Die Überlaufleitung 30 mündet mit ihrem ersten Ende 32 in den Gasraum 26 der Kondensationskammer 8 und zwar unmittelbar an der Decke 36 der Kondensationskammer 8. Das zweite Ende 34 der Überlaufleitung 30 mündet im Überlaufschacht 16 und zwar dort insbesondere am Boden 18 des Überlaufschachts 16 in die Abflusskammer 24. Die beiden Enden 32,34 sind über eine einfache Rohrleitung miteinander verbunden, welche zwei über einen unteren Siphonbogen 40 verbundene Siphonschenkel 38 sowie einen oberen Siphonbogen 42 aufweist. Wie aus der Figur zu entnehmen ist, ist die Überlaufleitung 30 nahezu vollständig in der Wandstruktur 4 angeordnet, so dass selbst bei einer schadhaften Rohrleitung der durch die Überlaufleitung 30 definierte Strömungsweg bestehen bleibt.

Der obere Siphonbogen 42 ist auf einer Höhe oberhalb des Bodens 18 angeordnet, wodurch in der Abflusskammer 24 eine Mindestflüssigkeitshöhe von beispielsweise 0,5 m gewährleistet ist. Der Abstand zwischen den beiden Siphonbögen 40,42 definiert eine Steighöhe S, bis zu der die beiden Schenkel 38 mit Kühlflüssigkeit F angefüllt sind. Durch die Wahl der Steighöhe S wird der Differenzdruckwert bestimmt, ab dem die in der Überlaufleitung 30 befindliche Flüssigkeit F herausgedrückt wird und ein offener Strömungsweg zwischen der Kondensationskammer 8 und dem Flutbecken 10 hergestellt ist. Beträgt die Steighöhe beispielsweise 10 m, so ist die Überlaufleitung 30 bis etwa zu einer Druckdifferenz von 10⁵ Pa (1,0 bar) verschlossen.

Beim Reaktorbetrieb ist von Zeit zu Zeit die Kühlung der im Flutbecken 10 befindlichen Kühlflüssigkeit F erforderlich. Hierzu wird die Kühlflüssigkeit F aus der Kondensationskammer 8 über eine nicht dargestellte Pumpe und einen nicht dargestellten Wärmetauscher in das Flutbecken 10 gepumpt. Übersteigt die Flüssigkeitshöhe im Speicherbekken 14 die erste Trennwand 12, so fließt die überschüssige Kühlflüssigkeit F in den Überlaufschacht 16 über und sammelt sich dort zunächst in der Separationskammer 22 an. Die Separationskammer 22 dient zum Abscheiden von Gasanteilen aus der über die erste Trennwand 12 herabstürzende Kühlflüssigkeit F, wenn nur geringe Massenströme auftreten. Die Flüssigkeit F strömt anschließend über die zweite Trennwand 20 in die Abflusskammer über. Bei großen Massenströmen ist die Separationskammer 16 derart ausgebildet, dass sich dort ein Flüssigkeits-Rückstau bildet und somit mitgerissene Gasteile (Luftbläschen) nach oben steigen und nicht in die Überlaufleitung 30 gelangen. Die Kühlflüssigkeit F fließt über die Überlaufleitung 30 ab, sobald in der Abflusskammer 24 die durch den oberen Siphonbogen 42 festgelegte minimale Füllstandshöhe überschritten wird. Die Kühlflüssigkeit F wird bei diesem Verfahren also insgesamt zwischen der Kondensationskammer 8 und dem Flutbecken 10 umgewälzt. Durch die spezielle Ausgestaltung der Überlaufleitung 30 ist das Flutbecken 10 von der Kondensationskammer 8 hierbei gasdicht getrennt.

Die in der Figur dargestellte Situation entspricht der des Normalbetriebs. Abweichend vom Normalbetrieb können Zustände auftreten, bei denen zwischen der Druckkammer 6 und der Kondensationskammer 8 größere Druckdifferenzen auftreten können. Da über das Kondensationsrohr 8 beispielsweise bei einem Kühlmittelverluststörfall Dampf aus der Druckkammer 6 in die Kondensationskammer 8 geleitet wird, darf über die Überlaufleitung 30 daher bei einem Überdruck in der Kondensationskammer 6 kein Druckausgleich erfolgen. Vielmehr muss der Druckausgleich bei Überschreiten eines Überdruckgrenzwerts in der Druckkammer 6 über das Kondensationsrohr 28 erfolgen. Zumindest vor Erreichen dieses Überdruckgrenzwertes muss die Überlaufleitung 30 absolut gasdicht verschlossen bleiben.

Umgekehrt besteht bei einem Unterdruck in der Druckkammer 6 das Problem, dass über das Kondensationsrohr 28 ein Druckausgleich erst sehr spät erfolgen kann, da zuvor erst nahezu die gesamte Menge der Kühlflüssigkeit F aus der Kondensationskammer 8 in die Druckkammer 6 überführt werden muss, bevor über das Kondensationsrohr 28 ein offener Strömungsweg zum Gasaustausch und damit zum Druckausgleich bereitgestellt wird.

Um zu hohe Unterdruckwerte in der Druckkammer 6 zu vermeiden, ist daher vorgesehen, dass bei Überschreiten eines Unterdruckgrenzwerts in der Druckkammer 6 der Gasaustausch und damit der Druckausgleich über die Überlaufleitung 30 erfolgt. Die Überlaufleitung 30 macht ab einem bestimmten Grenzdifferenzdruck den Strömungsweg frei, unabhängig davon, ob ein Überdruck oder Unterruck vorliegt. Über die Steighöhe S ist der maßgebliche Grenzdifferenzdruck, ab dem die Überlaufleitung 30 freigegeben wird, daher größer einzustellen als der maßgebliche Überdruckgrenzwert, ab dem der Druckausgleich über das Kondensationsrohr 28 erfolgt. Der Differenzdruck liegt hierbei vorzugsweise etwa (0,2 - 0,8) 10⁵ Pa (0,2 bar - 0,8 bar) oberhalb des Überdruckgrenzwertes. Die maßgeblichen Kriterien für die Höhe des Grenzwertes sind wie erwähnt einerseits die Steighöhe S und andererseits die mit der Füllstandshöhe H verbundene Höhe der Flüssigkeitssäule im Kondensationsrohr 28. In erster Näherung muss daher die Steighöhe S größer sein als die Höhe der Flüssigkeitssäule im Kondensationsrohr 28, die durch den Abstand des Ausflussendes des Kondensationsrohrs 28 und der Füllstandshöhe H bestimmt ist.

Durch die spezielle Anordnung und Ausgestaltung der Überlaufleitung 30 ist damit durch ein zuverlässig und einfach wirkendes passives Element, welches ohne externe Energieversorgung und ohne bewegliche Teile allein aufgrund physikalischer Gesetzmäßigkeiten voll funktionsfähig ist, ein sicherer Betrieb der Anlage in allen Betriebszuständen und ohne sicherheitstechnische Einbußen möglich. Dabei ist hervorzuheben, dass im Hinblick auf die Funktionsfähigkeit des Kühlsystems die Überlaufleitung 30 das Flutbecken 10 zu der Kondensationskammer 8 absolut gasdicht verschließt.

### Bezugszeichenliste

- 2: Sicherheitsbehälter
- 4: Wandstruktur
- 6: Druckkammer
- 8: Kondensationskammer
- 10: Flutbecken
- 12: erste Trennwand
- 14: Speicherbecken
- 16: Überlaufschacht
- 18: Boden
- 20: zweite Trennwand
- 22: Separationskammer
- 24: Abflusskammer
- 26: Gasraum
- 28: Kondensationsrohr
- 30: Überlaufleitung
- 32: erstes Ende
- 34: zweites Ende
- 36: Decke
- 38: Siphonschenkel
- 40: unterer Siphonbogen
- 42: oberer Siphonbogen

- H: Füllstandshöhe
- F: Kühlflüssigkeit
- S: Steighöhe

## Patentansprüche

1. Kemtechnische Anlage, insbesondere eine Siedewasserreaktoranlage, mit einer Druckkammer (6), mit einer Kondensationskammer (8) und mit einem mit der Druckkammer (6) verbundenen Flutbecken (10),
**dadurch gekennzeichnet,**
**dass** das Flutbecken (10) über eine nach Art eines Siphons ausgebildete Überlaufleitung (30) mit der Kondensationskammer (8) verbunden ist.

2. Anlage nach Anspruch 1,
**dadurch gekennzeichnet,**
**dass** die Überlaufleitung (30) zwei Siphonschenkel (38) umfasst und eine Steighöhe (S) aufweist, bis zu der die Überlaufleitung (30) im normalen Betriebszustand mit Flüssigkeit (F), gefüllt ist, wobei die Steighöhe (S) derart bemessen ist, dass ab einem Grenzdifferenzdruck zwischen der Druckkammer (6) und der Kondensationskammer (8) ein Druckausgleich zwischen der Kondensationskammer (8) und der Druckkammer (6) stattfindet.

3. Anlage nach Anspruch 2,
**dadurch gekennzeichnet,**
**dass** die Überlaufleitung (30) derart ausgebildet ist, dass bei Überschreiten eines in der Druckkammer (6) auftretenden Unterdruckgrenzwerts der Druckausgleich zwischen der Druckkammer (6) und der Kondensationskammer (8) über die Überlaufleitung (30) und bei Überschreiten eines in der Druckkammer (6) auftretenden Überdruckgrenzwerts der Druckausgleich über eine weitere Einrichtung (28) erfolgt.

4. Anlage nach Anspruch 3,
**dadurch gekennzeichnet,**
**dass** als weitere Einrichtung ein Kondensationsrohr (28) vorgesehen ist, das die Druckkammer (6) mit der Kondensationskammer (8) verbindet und in dieser unterhalb einer Füllstandshöhe (H) mündet, bis zu der die Kondensationskammer (8) im normalen Betriebszustand mit Flüssigkeit (F) gefüllt ist, so dass das Kondensationsrohr (28) bis zu der Füllstandshöhe (H) mit Flüssigkeit (F) gefüllt ist, und die Füllstandshöhe (H) derart bemessen ist, dass bei Überschreiten des Überdruckgrenzwerts ein Druckausgleich zwischen der Druckkammer (6) und der Kondensationskammer (8) über das Kondensationsrohr (28) erfolgt.

5. Anlage nach einem der vorhergehenden Ansprüche,
**dadurch gekennzeichnet,**
**dass** die Kondensationskammer (8) einen Gasraum (26) aufweist, in den ein erstes Ende (32) der Überlaufleitung (30) mündet.

6. Anlage nach Anspruch 5,
**dadurch gekennzeichnet,**
**dass** das erste Ende (32) in oder unmittelbar unterhalb der Decke (36) der Kondensationskammer (8) angeordnet ist.

7. Anlage nach einem der vorhergehenden Ansprüche,
**dadurch gekennzeichnet,**
**dass** die Überlaufleitung (30) zumindest in Teilbereichen innerhalb einer Wandstruktur (4) eingebettet ist.

8. Anlage nach einem der vorhergehenden Ansprüche,
**dadurch gekennzeichnet,**
**dass** das Flutbecken (10) einen Überlaufschacht (16) aufweist und dass ein zweites Ende (34) der Überlaufleitung (30) in den Überlaufschacht (16) mündet und insbesondere am Boden (18) des Überlaufschachts (10) angeordnet ist.

9. Anlage nach Anspruch 8,
**dadurch gekennzeichnet,**
**dass** die Überlaufleitung (30) einen oberen Siphonbogen (42) aufweist, der auf einer Höhe oberhalb des Bodens (18) des Überlaufschachts (16) angeordnet ist.

10. Verfahren zum Betrieb einer kerntechnischen Anlage, insbesondere einer Siedewasserreaktoranlage, die eine Kondensationskammer (8) und eine Druckkammer (6) aufweist,
**dadurch gekennzeichnet,**
**dass** bei Überschreiten eines Grenzdifferenzdrucks zwischen der Kondensationskammer (8) und der Druckkammer (8) ein Druckausgleich über eine Überlaufleitung (30) erfolgt, die ein zur Druckkammer (6) offenes Flutbecken (10) mit der Kondensationskammer (8) verbindet und nach Art eines Siphons ausgebildet ist, wobei im normalen Betriebszustand die Überlaufleitung (30) zumindest teilweise mit Flüssigkeit (F) gefüllt ist, die bei Überschreiten des Grenzdifferenzdrucks aus der Überlaufleitung (30) ausströmt.

11. Verfahren nach Anspruch 10,
**dadurch gekennzeichnet,**
**dass** bei Überschreiten eines in der Druckkammer (6) auftretenden Unterdruckgrenzwerts die Flüssigkeit (F) aus der Überlaufleitung (30) herausgedrückt wird und somit über die Überlaufleitung ein offener Gasweg zum Druckausgleich zwischen der Druckkammer (6) und der Kondensationskammer (8) gebildet ist.

12. Verfahren nach Anspruch 10 oder 11,
**dadurch gekennzeichnet,**
**dass** bei Überschreiten eines in der Druckkammer (6) auftretenden Überdruckgrenzwerts ein offener Gasweg über ein die Druckkammer (6) mit der Kondensationskammer (8) verbindendes Kondensationsrohr (28) zum Druckausgleich freigegeben wird.

## Claims

1. A nuclear facility, in particular a boiling-water reactor facility, having a pressure chamber (6), a condensation chamber (8) and a flood tank (10) connected with the pressure chamber (6),
**characterized in**
**that** the flood tank (10) is connected with the condensation chamber (8) by means of an overflow conduit (30) formed in the manner of a siphon.

2. The facility according to claim 1,
**characterized in**
**that** the overflow conduit (30) comprises two siphon legs (38) and has a rising height (S) up to which the overflow conduit (30) is filled with liquid (F) in normal operating status, the rising height (S) being dimensioned in such a way that, as from a limit differential pressure between the pressure chamber (6) and the condensation chamber (8), a pressure compensation takes place between the condensation chamber (8) and the pressure chamber (6).

3. The facility according to claim 2,
**characterized in**
**that** the overflow conduit (30) is formed in such a way that, when an underpressure limit occurring in the pressure chamber (6) is exceeded, the pressure compensation between the pressure chamber (6) and the condensation chamber (8) is effected via the overflow conduit (30), and, when an overpressure limit occurring in the pressure chamber (6) is exceeded, the pressure compensation is effected via a further device (28).

4. The facility according to claim 3,
**characterized in**
**that**, as a further device, a condensation pipe (28) is provided, connecting the pressure chamber (6) with the condensation chamber (8) and running into the latter below a filling height (H) up to which the condensation chamber (8) is filled with liquid (F) in normal operating status, so that the condensation pipe (28) is filled with liquid (F) up to the filling height (H), the filling height (H) being dimensioned in such a way that, when the overpressure limit is exceeded, a pressure compensation takes place between the pressure chamber (6) and the condensation chamber (8) via the condensation pipe (28).

5. The facility according to any of the preceding claims,
**characterized in**
**that** the condensation chamber (8) includes a gas space (26) into which a first end (32) of the overflow conduit (30) runs.

6. The facility according to claim 5,
**characterized in**
**that** the first end (32) is arranged in, or immediately below, the ceiling (36) of the condensation chamber (8).

7. The facility according to any of the preceding claims,
**characterized in**
**that** the overflow conduit (30) is embedded, at least in part, in a wall structure (4).

8. The facility according to any of the preceding claims,
**characterized in**
**that** the flood tank (10) includes an overflow shaft (16) and that a second end (34) of the overflow conduit (30) runs into the overflow shaft (16) and is arranged in particular at the bottom (18) of the overflow shaft (16).

9. The facility according to claim 8,
**characterized in**
**that** the overflow conduit (30) includes an upper siphon bend (42), which is arranged at a height above the bottom (18) of the overflow shaft (16).

10. A method for operating a nuclear facility in particular a boiling-water reactor facility, having a condensation chamber (8) and a pressure chamber (6),
**characterized in**
**that**, when a limit differential pressure between the condensation chamber (8) and the pressure chamber (6) is exceeded, a pressure compensation is effected via an overflow conduit (30) which connects a flood tank (10), open towards the pressure chamber (6), with the condensation chamber (8) and which is formed in the manner of a siphon, the overflow conduit (30) being in normal operating status at least partially filled with liquid (F) which flows out of the overflow conduit (30) when the limit differential pressure is exceeded.

11. The method according to claim 10,
**characterized in**
**that**, when an underpressure limit occurring in the pressure chamber (6) is exceeded, the liquid (F) is pressed out of the overflow conduit (30), an open gas path being thus formed via the overflow conduit for pressure compensation between the pressure chamber (6) and the condensation chamber (8).

12. The method according to claim 10 or 11,
**characterized in**
**that**, when an overpressure limit occurring in the pressure chamber (6) is exceeded, an open gas path is released for pressure compensation via a condensation pipe (28) connecting the pressure chamber (6) with the condensation chamber (8).

## Revendications

1. Installation nucléaire, en particulier installation nucléaire à eau bouillante, avec une chambre de compression (6), une chambre de condensation (8) et un réservoir de noyage (10) relié avec la chambre de compression (6),
**caractérisée en ce**
**que** le réservoir de noyage (10) est relié avec la chambre de condensation (8) au moyen d'une conduite de débordement (30) formée à la manière d'un siphon.

2. Installation selon la revendication 1,
**caractérisée en ce**
**que** la conduite de débordement (30) comprend deux branches de siphon (38) et a une hauteur de remontée (S) jusqu'à laquelle la conduite de débordement (30) est remplie de liquide (F) en état de fonctionnement normal, la hauteur de remontée (S) étant dimensionnée de manière que, à partir d'une pression différentielle limite entre la chambre de compression (6) et la chambre de condensation (8), une compensation de pression a lieu entre la chambre de condensation (8) et la chambre de compression (6).

3. Installation selon la revendication 2,
**caractérisée en ce**
**que** la conduite de débordement (30) est formée de manière que, lorsqu'une dépression limite survenant dans la chambre de compression (6) est excédée, la compensation de pression entre la chambre de compression (6) et la chambre de condensation (8) s'effectue au moyen de la conduite de débordement (30), et, lorsqu'une surpression limite survenant dans la chambre de compression (6) est excédée, la compensation de pression s'effectue au moyen d'un dispositif (28) additionnel.

4. Installation selon la revendication 3,
**caractérisée en ce**
**que**, en tant que dispositif additionnel, un tube de condensation (28) est prévu, liant la chambre de compression (6) avec la chambre de condensation (8) et débouchant dans cette dernière au-dessous d'une hauteur de remplissage (H) jusqu'à laquelle la chambre de condensation (8) est remplie de liquide (F) en état de fonctionnement normal, de manière que le tube de condensation (28) est rempli de liquide (F) jusqu'à la hauteur de remplissage (H), la hauteur de remplissage (H) étant dimensionnée de manière que, lorsque la surpression est excédée, une compensation de pression a lieu entre la chambre de compression (6) et la chambre de condensation (8) au moyen du tube de condensation (28).

5. Installation selon l'une quelconque des revendications précédentes,
**caractérisée en ce**
**que** la chambre de condensation (8) comprend un espace de gaz (26) dans lequel débouche une première extrémité (32) de la conduite de débordement (30).

6. Installation selon la revendication 5,
**caractérisée en ce**
**que** la première extrémité (32) est ménagée dans, ou immédiatement au-dessous, du plafond (36) de la chambre de condensation (8).

7. Installation selon l'une quelconque des revendications précédentes,
**caractérisée en ce**
**que** la conduite de débordement (30) est encastrée, au moins en partie, dans une structure de paroi (4).

8. Installation selon l'une quelconque des revendications précédentes,
**caractérisée en ce**
**que** le réservoir de noyage (10) comprend un puits de débordement (16) et qu'une seconde extrémité (34) de la conduite de débordement (30) débouche dans le puits de débordement (16) et est ménagée en particulier au fond (18) du puits de débordement (16).

9. Installation selon la revendication 8,
**caractérisée en ce**
**que** la conduite de débordement (30) comprend un coude de siphon supérieur (42), qui est ménagé à une hauteur au-dessus du fond (18) du puits de débordement (16).

10. Méthode pour faire fonctionner une installation nucléaire, en particulier une installation nucléaire à eau bouillante, avec une chambre de condensation (8) et une chambre de compression (6),
**caractérisée en ce**
**que**, lorsqu'une pression différentielle limite entre la chambre de condensation (8) et la chambre de compression (6) est excédée, une compensation de pression s'effectue au moyen d'une conduite de débordement (30) qui relie un réservoir de noyage (10), ouvert vers la chambre de compression (6), avec la chambre de condensation (8) et qui est formée à la manière d'un siphon, la conduite de débordement (30) étant remplie, en état de fonctionnement normal, au moins en partie, de liquide (F) qui s'écoule de la conduite de débordement (30) lorsqu'une pression différentielle limite est excédée.

11. Méthode selon la revendication 10,
**caractérisée en ce**
**que**, lorsqu'une dépression limite survenant dans la chambre de compression (6) est excédée, le liquide (F) est pressé hors de la conduite de débordement (30), un chemin de gaz ouvert étant ainsi formé au moyen de la conduite de débordement pour la compensation de la pression entre la chambre de compression (6) et la chambre de condensation (8).

12. Méthode selon la revendication 10 or 11,
**caractérisée en ce**
**que**, lorsqu'une surpression limite survenant dans la chambre de compression (6) est excédée, un chemin de gaz ouvert est libéré pour la compensation de pression au moyen d'un tube de condensation (28) reliant la chambre de compression (6) avec la chambre de condensation (8).
